(19) Europäisches Patentamt
European Patent Office
Office européen des brevets

(11) Publication number: **0 050 249**
**B1**

(12) **EUROPEAN PATENT SPECIFICATION**

(45) Date of publication of patent specification: **06.05.87**

(51) Int. Cl.$^4$: **C 08 L 43/04,** C 08 L 101/02, C 08 F 8/42, C 08 F 230/08

(21) Application number: **81107863.3**

(22) Date of filing: **02.10.81**

(54) **A polymer composition having improved stability against moisture and its use.**

(30) Priority: **04.10.80 JP 139184/80**

(43) Date of publication of application: **28.04.82 Bulletin 82/17**

(45) Publication of the grant of the patent: **06.05.87 Bulletin 87/19**

(84) Designated Contracting States: **BE DE FR GB IT**

(56) References cited:
EP-A-0 009 947
EP-A-0 044 049
EP-A-0 048 461
FR-A-2 401 176
US-A-3 903 052
US-A-4 157 321

(73) Proprietor: **KANEGAFUCHI KAGAKU KOGYO KABUSHIKI KAISHA**
**2-4 Nakanoshima 3-chome**
**Kita-ku Osaka-shi Osaka-fu (JP)**

(72) Inventor: **Kato, Yasushi**
**27-14 1-chome Katayama-cho**
**Nagata-ku Kobe-shi Hyogo-ken (JP)**
Inventor: **Furukawa, Hisao**
**Sanseiso, 96-1 Aza-Takigahira Shioya-cho**
**Tarumi-ku Kobe-shi Hyogo-ken (JP)**

(74) Representative: **Vossius & Partner**
**Siebertstrasse 4 P.O. Box 86 07 67**
**D-8000 München 86 (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

EP 0 050 249 B1

Courier Press, Leamington Spa, England.

**Description**

The present invention relates to a polymer composition retaining excellent stability even after being stored for a long time or used frequently in moist air, which is useful for paints, sealants, adhesives and many other coating materials.

More specifically, the present invention relates to a polymer composition stabilized against increase of its viscosity in the presence of moisture by adding a hydrolyzable ester and/or an alkyl alcohol to the polymer composition, which comprises a vinyl-type copolymer the main chain of which substantially consists of a vinyl polymer and which contains units of an ethylenically unsaturated monomer having polar radicals other than maleic anhydride and at least one silyl group carrying a hydrolyzable radical at the end of the main chain or in side chains of each molecule.

A variety of such kinds of vinyl-type copolymers have so far been known.

These vinyl-type copolymers adhere to inorganic matter due to the silyl groups which they contain; they also tend to harden by cross-linking in the presence of moisture at ambient temperature. Accordingly, they have been used in paints, adhesives, sealants or silane-coupling agents. A drawback is their increasing viscosity after prolonged storage or frequent use in humid air.

It is thus necessary to keep these polymer compositions dry in a closed container. Even then, any trace of moisture collecting on top of the polymer compositions inevitably detracts from their value as a commercial product before use. Therefore, there has been a need for improvement such that their solution viscosity does not increase too much in the presence of moisture.

In US—A—4,043,953 the addition of a hydrolyzable reactive silane to an organic silane polymer for improving polymer stability to moisture is described. When 0.5 to 15% by weight of a hydrolyzable reactive silane, $X'_{n'}Si(OR)_{4-n'}$, where X' stands for an organic residue having 1 to 12 carbon atoms, R stands for methyl, ethyl, 2-methoxymethyl, 2-ethoxyethyl, or an acyl residue having less than 6 carbon atoms, and n' is an integer from 0 to 2, is added to an organic silane polymer, which is produced by reacting a monomer containing the group $CH_2=C<$ with an acrylatealkoxysilane, methacrylatealkoxysilane, or vinylalkoxysilane, the pot life of the organic silane is improved in the presence of a hardening agent.

US—A—4,157,321 discloses an organic polymer very stable to moisture which is composed of: (a) an ethylenically unsaturated monomer containing the group $>C=C<$, and a compound represented by $R''SiX''_nR'_{3-n}$, where R'' stands for a monovalent organic group having double bonds, R' stands for a monovalent hydrocarbon group, and n is an integer from 1 to 3; and X'' is a hydrolyzable $C_{1-4}$ alkoxy group, alkoxyalkoxy group containing up to about 6 C-atoms, $C_{2-4}$ acyloxy group, phenoxy group or oxime group, (b) 0.5 to 25 parts by weight of a hydrolyzable organic silane monomer having a hydrolyzable group or a trialkylorthoformate, or (c) 2 to 50 parts by weight of an $C_{1-4}$-alkyl alcohol.

However, neither US—A—4,043,953 nor US—A—4,157,321 illustrate monomers containing the group $CH_2=C<$ or $>C=C<$ in which polar groups as the hydroxyl, carboxyl, acid anhydride, amido, or amino residues are contained. On the contrary, the US—A—4,043,953 mentions that the addition of monomers containing active hydrogen like hydroxy, carboxy, and amido groups to an organic silane polymer lowers the stability of that polymer and gelation tends to occur as a result.

A vinyl-type copolymer containing silyl groups with hydrolyzable residues which may contain acid anhydride or carboxy residues copolymerized is described in FR—A—2,401,176. However, nothing is said about the stability of those polymer compositions.

Thus it is a fact that no polymer composition with good stability to moisture has been known, although it was to be expected that other mechanical properties like adhesion to organic matter are improved when polar groups, such as hydroxy, carboxy, acid anhydride, amido, and amino groups, are introduced into monomers to be copolymerized.

In EP—A—44 049, published after the priority date of this invention a polymeric composition is disclosed, comprising

a) A vinyl-type copolymer, with the main chain substantially composed of a vinyl polymer and having in each molecule at least one silyl group bonded to a hydrolyzable radical and containing 0,1 to 20% by weight of copolymerized maleic anhydride,

b) optionally, a lower alkyl alcohol such as methanol and (as hydrolyzable ester) methyl ortoformate which increases the storage stability of the polymer composition,

c) optionally, a curing catalyst or promoter.

The present invention is based on the finding that a polymer composition comprising any monomer having polar radicals but not containing units derived from maleic anhydride is contained in the polymer composition, so long as the content of the said monomer is within the range from 0.1 to 20% by weight, may be stabilized by adding a hydrolyzable ester and/or an alkyl alcohol.

It is the object of the present invention to provide a polymer composition which retains excellent stability against moisture even after prolonged storage or frequent use in air and which is favorably applicable to paints, sealants, and many kinds of coating materials. This object of the present invention can be accomplished by a polymer composition having improved stability against moisture, comprising

a) a vinyl-type copolymer, the main chain of which substantially consists of a vinyl polymer and which contains at least one silyl group carrying a hydrolyzable radical at the end of the main chain or in side chains of each molecule and

b) the hydrolyzable ester and/or an alkyl alcohol, which is characterizewd in that the vinyl-type copolymer contains 0.1 to 20% by weight of ethylenically unsaturated monomer as a copolymeric unit having at least one polar radical but does not contain units derived from maleic anhydride.

In this specification the term "hydrolyzable radical" is used to designate hydrolytically clearable groups bonded to the silicon atom. The term "polar radical" is used to designate certain groups bonded to the ethylenically unsaturated comonomer. Some residues, like amino or acid amido groups, can serve as hydrolyzable as well as polar radical.

The vinyl-type copolymer of this invention should contain at least one silyl group, but may contain more than one silyl group in each molecule. Generally, these silyl groups can be described by the general formula

$$X_n\text{—}\overset{(R_1)_{3-n}}{\overset{|}{Si}}\text{——}\overset{(R_2)}{\overset{|}{CH}}\text{—},$$

where X represents a hydrolyzable radical; $(R_1)$ and $(R_2)$ represents hydrogen atoms, or alkyl, aryl, and aralkyl groups any of which have 1 to 10 carbon atoms; an n is an integer from 1 to 3 inclusive.

The hydrolyzable radical may, for example, be a halogen atom or an alkoxy, acyloxy, ketoximate, amino, acid amide, aminoxy, mercapto or alkenyloxy group.

The ethylenically unsaturated monomer includes any monomer which has hydroxy, carboxy, acid anhydride with the exception of maleic anhydride, amido, or amino groups. For example, the ethylenically unsaturated monomer includes monomers which have hydroxy groups, e.g. 2-hydroxyethylacrylate, 2-hydroxyethylmethacrylate, 2-hydroxypropylacrylate, 2-hydroxypropylmethacrylate, 2-hydroxyvinylether and N-methylolacrylamide, carboxy groups, e.g. acrylic acid, methacrylic acid, itaconic acid, and fumaric acid; amido groups, e.g. acrylamide, methacrylamide, itaconic acid diamide, alphaethylacrylamide, crotonamide, fumaric acid diamide, and maleic acid diamide; amino groups, e.g. diethylaminoethylacrylate, diethylaminoethylmethacrylate and aminoethylvinylether.

These ethylenically unsaturated monomers are used alone or in combination; the amount to use is generally in the range from 0.1 to 20% by weight, preferably in the range from 0.5 to 10% by weight, based on the weight of the vinyl-type copolymer.

Although the molecular weight of the vinyl-type copolymer is not particularly limited, it is preferred to be in the range from 1,000 to 30,000 lest the stability of the polymer composition against moisture be impaired when a large amount of the unsaturated ethylenic monomer is used. Especially, when more than one kind of ethylenic monomers are used together, the molecular weight of the vinyl-type copolymer should preferably be 10,000 or less.

The process for producing the vinyl-type copolymer can be modified in various ways, but the following two processes seem to be commercially most acceptable and therefore preferred;

(A) A process including a silylation reaction between a vinyl-type polymer having carbon double bonds and a hydrosilane:

This reaction is catalyzed by transition elements of group VIII of the periodic system of elements. The hydrosilane employed for the above process has the general formula

$$X_n\text{—}\overset{(R_1')_{3-n}}{\overset{|}{Si}}\text{—}H,$$

where $R_1'$ represents an alkyl, aryl, and aralkyl group any of which have 1 to 10 carbon atoms; X stands for a hydrolyzable radical, and n is an integer from 1 to 3 inclusive.

Examples of such hydrosilanes are halogenosilanes like methyldichlorosilane, trichlorosilane, and phenyldichlorosilane; alkoxysilanes like methyldiethoxysilane, methyldimethoxysilane, phenyldimethoxy-silane, trimethoxysilane, and triethoxysilane; acyloxysilanes like methyldiacetoxysilane, phenyl-diacetoxysilane, and triacetoxysilane; aminoxysilanes like methyldiaminoxysilane, triaminoxysilane, methyldiaminosilane, and triaminosilane; bis(cyclohexylketoxymate) methysilane, methyldiisophenoxy-silane and triisopropenoxysilane.

The amount of hydrosilanes to use is not critical; however, their amount is preferred to be 0.5 to 2 times the total amount of carbon double bonds contained in the vinyl-type copolymer per mole. If, however, much more of the hydrosilane is used in the reaction, the excess amount may only be collected later for reasons of economy.

For the above preparation of the polymer composition according to the present invention cheap and reactive halogenosilanes can easily be utilized. Nevertheless, the vinyl-type copolymer with silyl radicals, produced by the use of halogenosilanes, rapidly hardens at room temperature while liberating hydrogen chloride when exposed to air; accordingly, this copolymer has an intensive odour and attacks most substances near or in contact with it. This drawback limits the practical use of the polymer. In such cases, it is desirable to substitute the halogen atoms contained for some other hydrolyzable radicals in order that

the vinyl-type copolymer may be employed practically using a method which is, for example, described in JP—A—91546/79.

There is virtually no restriction to the preparation of the vinyl-type copolymer of the inventive polymer composition, except that in this process variant (A) the vinyl-type copolymer should contain an unsaturated ethylenic monomer having other polar radicals then hydroxyl. That is, it is appropriate if this copolymer mainly contains acrylic or methacrylic esters such as methylacrylate, methylethacryalte, ethylacrylate, ethylmethacrylate, butylacryalte, butylmethacrylate, 2-ethylhexylacrylate, 2-ethylhexylmethacrylate, glycidylacryalte, glycidylmethacrylate, and the like, styrene, alpha-styrene, vinyl chloride, vinyl acetate, and other analogous monomers.

Further to these vinyl compounds which may be contained in the vinyl-type copolymer alone or in admixture, a small amount of allylacrylate, allylmethacrylate, or diallylphthalate may also be included in the vinyl-type copolymer be means of radical polymerization. Thuis, carbon double bonds can optionally be introduced into the end of the main chain or in side chains of the vinyl copolymer before silylation of the vinyl-type copolymer

In this case, the number silyl radicals to be introduced to the vinyl-type copolymer can be previously determined via the amount of the above allyl monomers.

The molecular weight of the vinyl-type copolymer can be adjusted freely be adding chain transfer agents like n-dodecylmercaptane or t-dodecylmercaptane, if necessary; in this case, the polymerization is carried out with or without solvents. If solvents are required, non-reactive solvents, such as ethers, hydrocarbons, and acetic esters are preferably employed.

According to the described process for producing the vinyl-type copolymer of the present invention, transition elements are required as catalyst to bring the hydrosilanes into the place of the carbon double bonds of the vinyl-type copolymer. The catalysts are selected from platinum, rhodium, cobalt, palladium, and nickel of group VIII of the periodic system. The silylation can be carried out at a temperature ranging from 50 to 150°C for approximately 1 to 10 hours.

(B) A process including copolymerization of a vinyl compound and a reactive silyl compound:

This process is performed by radical polymerization between a vinyl compound and a silane represented by the general formula

$$(R_3)\text{—}\overset{\displaystyle (R_1')_{3-n}}{\overset{|}{Si}}\text{—}X_n,$$

where $(R_1')$ stands for an alkyl, aryl and aralkyl groups any of which have 1 to 10 carbon atoms; $(R_3)$ stands for an organic reside having double bonds capable of polymerization; X stands for a hydrolyzable radical and n is an integer from 1 to 3 inclusive. Specific examples of preferred silanes which are useful for the above process for preparing the vinyl-type copolymer contained in the inventive polymer composition are:

$$CH_2{=}CH\overset{\displaystyle CH_3}{\overset{|}{Si}}(OCH_3)_2,\ CH_2{=}CH\overset{\displaystyle CH_3}{\overset{|}{Si}}Cl_2,\ CH_2{=}CHSi(OCH_3)_3,\ CH_2{=}CHSiCl_3,\ CH_2{=}CHCOO(CH_2)_3\overset{\displaystyle CH_3}{\overset{|}{Si}}(OCH_3)_2,$$

$$CH_2{=}CHCOO(CH_2)_3Si(OCH_3)_3,\ CH_2{=}CHCOO(CH_2)_3\overset{\displaystyle CH_3}{\overset{|}{Si}}Cl_2,\ CH_2{=}CHCOO(CH_2)_3SiCl_3,$$

$$CH_2{=}C(CH_3)COO(CH_2)_3Si(OCH_3)_3,\ CH_2{=}C(CH_3)COO(CH_2)_3\overset{\displaystyle CH_3}{\overset{|}{Si}}(OCH_3)_2,$$

$$CH_2{=}C(CH_3)COO(CH_2)_3SiCl_3,\ CH_2{=}C(CH_3)COO(CH_2)_3\overset{\displaystyle CH_3}{\overset{|}{Si}}Cl_2,$$

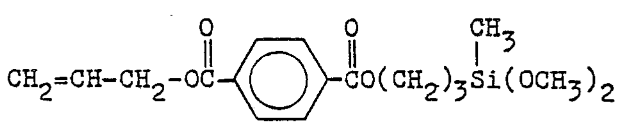
,

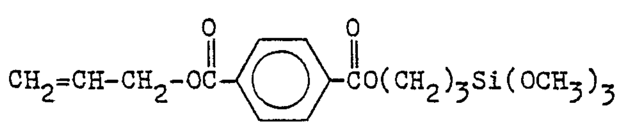
,

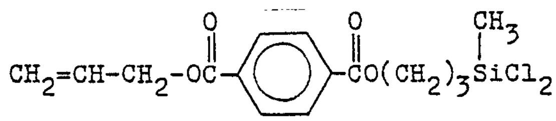 , and

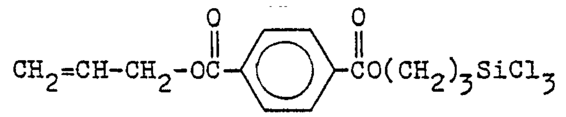 .

These silanes can be produced in various ways. For instance, they can be produced by reacting acetylene, allylacrylate, allylmethacrylate, or diallylphthalate with methyldimethoxysilane, methyldichlorosilane, trimethoxysilane, or trichlorosilane in the presence of the above-mentioned transition element catalyst.

According to this process, it is possible to use not only any monomer applicable in the first mentioned process (A), but also ethylenically unsaturated monomers not mentioned in process (A). The copolymerization is performed by ordinary solution polymerization, in which process the vinyl compounds and the silanes are reacted with the aid of a radical initiator at a temperature ranging from 50 to 150°C. Chain transfer agents, such as n-dodecyl mercaptane and t-dodecylmercaptane, are also added to the reaction in order to suitably adjust the molecular weight of the copolymer if required. Solvents may or may not be used; if solvents are used, non-reactive ones like ethers, hydrocarbons, and acetic esters are preferred.

The hydrolyzable radical in the silyl group containing vinyl resin obtained by the method (B) can be changed as described hereinbefore in connection with the method (A).

In this way a vinyl-type copolymer can be obtained the main chain of which is substantially made up from a vinyl polymer which has at least one silyl group combined with a hydrolyzable radical at the end of the main chain or side chains of each molecule, and contains 0.1 to 20% by weight of an unsaturated ethylenic monomer having a polar radical.

Hydolyzable esters which are preferably used in the polymer composition according to this invention include trialkylorthoformates, such as trimethylothoformate, triethylorthoformate, tripropylorthoformate, and tributylorthoformate, and hydolyzable organic silicon compounds represented by the general formula $R'''_{4-n''}SiX_{n''}$, in which X stands for a hydrolyzable radical; R''' stands for a monovalent organic radical which may or may not contain functional groups; and n'' is an integer from 1 to 4, preferably either 3 ot 4, such as methyltrimethoxysilane, γ-chloropropyltrimethoxysilane, methyltriethoxysilane, ethyltriethoxysilane, phenyltriethoxysilane, methyltriacetoxysilane, vinyltrimethoxysilane, γ-methacryloxypropyltrimethoxysilane, γ-mercaptopropyltrimethoxysilane, tetramethylorthosilicate, tetraethylorthosilicate, tetrapropylorthosilicate and tetrabutylorthosilicate.

The amount of these hydrolyzable esters is in the range from 0.1 to 50 parts by weight of the hydrolyzable ester per 100 parts by weight of the vinyl-type copolymer.

Preferred alkyl alcohols used in the polymer composition of this invention have preferably 1 to 10 carbon atoms in their alkyl moiety. Specific examples of preferred alkyl alcohols include methyl alcohol, ethyl alcohol, n-propyl alcohol, isopropyl alcohol, n-butyl alcohol, iso-butyl alcohol, sec-butyl alcohol, tert-butyl alcohol, n-amyl alcohol, iso-amyl alcohol, hexyl alcohol, octyl alcohol and cellosolve®. The amount of these alkyl alcohols is preferably in the range from 0.1 to 100 parts by weight per 100 parts by weight of the vinyl-type copolymer.

The vinyl-type copolymer of this invention becomes hard by cross-linking to a net-work structure when exposed to air. The hardening rate varies with the ambient temperature, relative humidity, and types of hydrolyzable radicals employed. Therefore, before preparing the vinyl-type copolymer, some thought should be given to the type of hydrolyzable radical to be used.

In the polymer composition of the present invention, a hardening agent may or may not be used for hardening the vinyl-type copolymer. If a hardening agent is required, the following agents are preferably employed: alkyltitanium; metal salts of carboxylic acids, such as tin ocylate, dibutyltin dilaurate, lead octylate; organic tin compounds of the sulfide or mercaptide type, such as monobutyltin sulfide, and dioctyltin dioctylmercaptide; acidic catalysts, such as phosphoric acid, p-toluenesulfonic acid, and phthalic acid; amines, such as tetraethylenepentamine, triethylenediamine, and n-β-aminoethyl-γ-aminopropyltrimethoxysilane; alkaline catalysts such as potassium hydroxide, and sodium hydroxide. The amount of these hardening agents is preferred to be within the range from 0.001 to 10% by weight based upon the weight of the vinyl-type copolymer.

The polymer composition of the present invention which is made up from a vinyl-type copolymer, a hydrolyzable ester, and/or an alkyl alcohol by mixing, is useful not only per se but also as a base material for paints and other coating materials, because it is able to harden at ambient temperature and below. As a matter of fact, the polymer composition rapidly hardens at room temperature, and leaves an extremely lusterous coat on surfaces. In addition, it is also possible to increase the hardness of the coat by further adding compounds like ethylsilicate and/or silane coupling agents to the polymer composition.

Moreover, the inventive polymer composition can readily be mixed into any kind of conventional paints, and coating materials such a lacquer, acrylic lacquer, thermosetting acrylic apint, alkyd-type paint,

melamine-type paint, epoxy-type paint, etc. in order to improve their adhesion, weathering resistance, and other properties desired in these paints.

On the other hand, various kinds of fillers or pigments, for example silica, calcium carbonate, magnesium carbonate, titanium oxide, iron oxide, or fiberglass, can be mixed into the polymer composition as well. In view of such a variety of modifications, the present polymer composition can be effectively applied to coatings and sealants for aircraft, buildings, automobiles, glassware, as well as in treating agents for various inorganic materials.

Similarly, the polymer composition is so adherent that it can be used alone or in combination with other adhesives to stick on inorganic material to another inorganic material, an organic material to another organic one, or an inorganic material to an organic material. Particularly in the last case, the inventive composition proves to be much more effective in improving adhesion than the conventional adhesives.

The present invention will be understood more easily in reference to the following examples.

Example 1

A solution of 2 g of azoisobutyronitrile dissolved in a mixture of 30 g of styrene, 16 g of allylmethacryalte, 20 g of methylmethacrylate, 19 g of n-butylmethacrylate, 14 g of butylacrylate, 3 g of diethylaminoethylacrylate, and 2 g of n-dodecylmercaptane were added dropwise to 70 g of xylene and heated at 90° in a reactor. The reaction was conducted for 10 hours. As a result, there was obtained a vinyl-type copolymer with allyl-type unsaturated groups having a molecular weight of 8,000. Infrared spectroscopy showed that there was an absorption band attributed to carbon double bond at 1648 $cm^{-1}$.

After that, 40 g of the solvent was removed from the polymer solution. Subsequently, an isopropanol solution containing 1.5 g of methyldimethoxysilane and 0.0005 g of chloroplatinic acid was added to 16 g of the vinyl-type copolymer, and the reaction was carried out at 90°C for 6 hours in a closed vessel.

Infrared spectroscopy showed that the absorption band at 1648 $cm^{-1}$ disappeared. In this way, a vinyl-type copolymer with silyl radicals was produced.

Example 2

A solution of 2 g of azobisisobutyronitrile dissolved in a mixture of 30 g of styrene, 22 g of γ-methacryloxypropyltrimethoxysilane, 22 g of methylmethacrylate, 15 g of n-butylmethacrylate, 18 g of butylacrylate, 4 g of acrylamide and 10 g of n-butanol was added dropwise to 70 g of xylene and heated at 90°C in a reactor. The reaction was conducted for 10 hours. As a result, a vinyl-type copolymer with silyl radicals which has a molecular weight of 14,000 was produced.

Example 3

A solution of 2 g of azobisisobutyronitrile dissolved in a mixture of 30 g of styrene, 22 g of

$$CH_2{=}C(CH_3)COO(CH_2)_3Si(OCH_3)_3,$$

22 g of methylmethacrylate 15 g of n-butylmethacrylate, 18 g of butylacrylate, 4 g of 2-hydroxyethylmethacrylate and 4 g of n-dodecylmercaptane was added dropwise to 70 g of xylene and heated at 90°C in a reactor, and the reaction was performed for 10 hours. A vinyl-type copolymer with silyl radicals having a molecular weight of 6,000 was obtained.

Example 4

In the reaction mixture of Example 3, 4 g of 2-hydroxyethylmethyacrylate was replaced by 2 g of methyacrylic acid. The reaction was conducted in similar manner and a vinyl-type copolymer with silyl radicals having a molecular weight of 6,500 was obtained.

Titanium oxide was mixed into the polymer solutions obtained in the examples 1 to 4 respectively to prepare white enamels by means of a ball-mill. Mixing was conducted such that the ratio of the polymer to the titanium oxide was 1;1 in the solid state. After stabilizers (see Table I) had been added, these white enamels were diluted to a specific consistence and left to stand in a closed atmosphere at 50°C for 1 month to investigate the change in viscosity (case I).

Independently, the four kinds of clear polymer solutions of examples 1 to 4 containing no titanium oxide were left to stand in a closed atmosphere under the same conditions as the above in order to see the change in viscosity after 3,000 ppm of water had been added (case II). The results are summerized in Table I. It can easily be seen from these examples that the polymer compositions of the present invention all prove to be excellent in stability againt moisture, because they show only a slight change is viscosity. In Table I OFM and OSE stand for trimethylorthoformate and tetraethylorthoformate, respectively.

TABLE I

| | | white enamel (case I) | | clear solution (case II) | |
|---|---|---|---|---|---|
| | stabilizer added | original | one month later | original | one month later |
| Example 1 | methanol (10 pts) | 250 mPa·s | 300 mPa·s | — | — |
| Example 2 | (i) no stabilizer | 250 | 2,000 | 250 mPa·s | 5,000 mPa·s |
| | (ii) methanol ( 3 pts)<br>OSE ( 5 pts) | 250 | 400 | 250 | 300 |
| Example 3 | methanol (10 pts)<br>OFM ( 1 pts)<br>OSE (10 pts) | 250 | 500 | 250 | 300 |
| Example 4 | methanol (10 pts)<br>OSE ( 7 pts) | 250 | 600 | 250 | 300 |

**Claims**

1. A polymer composition having improved stability against moisture, comprising

a) a vinyl-type copolymer, the main chain of which substantially consists of a vinyl polymer and which contains at least one silyl group carrying a hydrolyzable radical at the end of the main chain or in side chains of each molecule and

b) a hydrolyzable ester and/or an alkyl alcohol, characterized in that the vinyl-type copolymer contains 0.1 to 20% by weight of an ethylenically unsaturated monomer as a copolymeric unit having at least one polar radical but does not contain units derived from maleic anhydride.

2. A polymer composition as claimed in claim 1, in which the ethylenically unsaturated monomer contains an amido group of a carboxylic acid as the polar radical.

3. A polymer composition as claimed in claim 1, in which the ethylenically unsatruated monomer contains a carboxy group as the polar radical.

4. A polymer composition as claimed in claim 1, in which the ethylenically unsaturated monomer contains an acid anhydride group other than maleic anhydride as the polar radical.

5. A polymer composition as claimed in claim 1, in which.the ethylenically unsaturated monomer conatins a hydroxy group as the polar radical.

6. A polymer composition as claimed in claim 1, in which the hydrolyzable ester is trialkylorthoformate.

7. A polymer composition as claimed in claim 1, in which the hydrolyzable ester is an organic silicon compound.

8. A polymer composition as claimed in claim 1, in which the hydrolyzable ester is a mixture of trialkylorthoformate and a hydrolyzable organic silicon compound.

9. A polymer composition as claimed in claim 1, in which 0.1 to 50 parts by weight of the hydrolyzable ester are contained per 100 parts by weight of the vinyl-type copolymer.

10. A polymer composition as claimed in claim 1, in which the alkyl alcohol has 1 to 10 carbon atoms in its alkyl moiety.

11. A polymer composition as claimed in claim 1, in which 0.1 to 100 parts by weight of alkyl alcohol are contained per 100 parts by weight of the vinyl-type copolymer.

12. A polymer composition as claimed in claim 1, in which the molecular weight of the vinyl-type copolymer is in the range of 1,000 to 30,000.

13. Use of the polymer composition according to any of claims 1 to 12 in coating materials, especially in paints, and as adhesives.

**Patentansprüche**

1. Polymermass mit verbesserter Beständigkeit gegen Feuchtigkeit, umfassend

a) ein Copolymerisat von Vinyl-Type, dessen Hauptkette im wesentlichen aus einem Vinyl-Polymerisat besteht und das mindestens eine einen hydrolysierbaren Rest am Ende der Hauptkette oder in Seitenketten eines jeden Moleküls tragende Silylgruppe enthält, und

b) einen hydrolysierbaren Ester und/oder einen Alkylalkohol, dadurch gekennzeichnet, daß das Copolymerisat vom Vinyl-Type 0,1 bis 20 Gew.-% eines äthylenisch ungesättigten Monomeren als Copolymerisat-Einheit enthält, das mindestens einen polaren Rest aufweist, jedoch keine von Maleinsäureanhydrid abgeleiteten Einheiten enthält.

2. Polymermasse nach Anspruch 1, in der das äthylenisch ungesättigte Monomere eine Amidogruppe einer Carbonsäure als polaren Rest enthält.

3. Polymermasse nach Anspruch 1, in der das äthylenisch ungesättigte Monomere eine Carboxylgruppe als polaren Rest enthält.

4. Polymermasse nach Anspruch 1, in der das äthylenisch ungesättigte Monomere eine Säureanhydridgruppe, die nicht Maleinsäureanhydrid ist, als polaren Rest enthält.

5. Polymermasse nach Anspruch 1, in der das äthylenisch ungesättigte Monomere eine Hydroxylgruppe als polaren Rest enthält.

6. Polymermasse nach Anspruch 1, in der der hydorlyzierbare Ester ein Orthoameisensäuretrialkylester ist.

7. Polymermasse nach Anspruch 1, in der der hydrolysierbare Ester eine organische Siliciumverbindung ist.

8. Polymermasse nach Anspruch 1, in der der hydrolysierbare Ester ein Gemisch aus einem Orthoameisensäuretrialkylester und einer hydrolysierbaren organischen Siliciumverbindung ist.

9. Polymermasse nach Anspruch 1, in der 0,1 bis 50 Gew.-Teile des hydrolysierbaren Esters pro 100 Gew.-Teile des Copolymerisates vom Vinyl-Typ enthalten sind.

10. Polymermasse nach Anspruch 1, in der der Alkylalkohol 1 bis 10 Kohlenstoffatome in seiner Alkyleinheit aufweist.

11. Polymermasse nach Anspruch 1, in der 0,1 bis 100 Gew.-Teile Alkylalkohol pro 100 Gew.-Teile Copolymerisat vom Vinyl-Type enthalten sind.

12. Polymermasse nach Anspruch 1, in der das Molekulargewicht des Copolymerisates vom Vinyl-Typ im Bereich von 1000 bis 30 000 liegt.

13. Verwendung der Polymermasse nach den Ansprüchen 1 bis 12 Beschichtungs-Werkstoffen, insbesondere in Anstrichen, und als Klebstoffe.

**Revendications**

1. Composition polymère ayant une stabilité améliorée à l'humidité, comprenant

a) un compolymère du type vinylique, dont la chaîne principale se compose principalement d'un polymère vinylique et qui contient au moins un groupe silyle comportant un radical hydrolysable à l'extrémité de la chaîne principale ou dans les chaînes latérales de chaque molécule et

b) un ester hydrolysable et/ou un alcool alkylique, caractérisée en ce que le copolymère du type vinylique contient 0,1 à 20% en poids d'un monomère éthyléniquement insaturé en tant qu'unité copolmère comportant au moins un radical polaire mais ne contient pas d'unités provenant d'anhydride maléique.

2. Composition polymère suivant la revendication 1, caractérisée en ce que le monomère éthyléniquement insaturé contient un groupe amido d'un acide carboxylique comme radical polaire.

3. Composition polymère suivant la revendication 1, caractérisée en ce que le monomère éthyléniquement insaturé contient un groupe carboxy comme rdical polaire.

4. Composition polymère suivant la revendication 1, caractérisée en ce que le monomère éthyléniquement insaturé contient un groupe d'anhydride d'acide différent de l'anhydride maléique comme radical polaire.

5. Composition polymère suivant la revendication 1, caractérisée en ce que le monomère éthyléniquement insaturé contient un groupe hydroxy comme radical polaire.

6. Composition polymère suivant la revendication 1, caractérisée en ce que l'ester hydrolysable est un trialkylorthoformiate.

7. Composition polymère suivant la revendication 1, caractérisée en ce que l'ester hydrolysable est un composé de silicium organique.

8. Composition polymère suivant la revendication 1, caractérisée en ce que l'ester hydrolysable est un mélange de trialkylorthoformiate et d'un composé de silicium organique hydrolysable.

9. Composition polymère suivant la revendication 1, caractérisée en ce qu'elle contient 0,1 à 50 parties en poids d'ester hydrolysable pour 100 parties en poids de copolymère du type vinylique.

10. Composition polymère suivant la revendication 1, caractérisée en ce que le fragment alkyle de l'alcool alkylique comporte 1 à 10 atomes de carbone.

11. Composition polymère suivant la revendication 1, caractérisée en ce qu'elle contient de 0,1 à 100 parties en poids d'alcool alkylique pour 100 parties en poids de copolymère du type vinylique.

12. Composition polymère suivant la revendication 1, caractérisée en ce que le poids moléculaire du copolymère du type vinylique est de l'ordre de 1,000 à 30,000.

13. Utilisation de la composition polymère suivant l'une quelconque des revendications 1 à 12, dans des matières de revêtement, en particulier dans des peintures, et comme adhésifs.